# EUROPEAN PATENT APPLICATION

(11) **EP 0 730 898 A2**
(43) Date of publication of application: **11.09.1996**
(21) Application number: 96301488.1
(22) Date of filing: 05.03.1996
(51) Int. Cl.: B01D 53/22

(54) **Volatile organic component removal by membrane separation using countercurrent sweep gas**

(30) Priority: 07.03.1995 US 399047
(71) Applicant: BEND RESEARCH, INC., Bend Oregon, 97701 (US)
(72) Inventor: Friesen, Dwayne T., Bend, Oregon 97702 (US); Ray, Roderick J., Bend, Oregon 97701 (US); Newbold, David D., Bend, Oregon 97701 (US); McCray, Scott B., Bend, Oregon 97701 (US)
(74) Representative: Skerrett, John Norton Haigh

(57) **Abstract**

There is disclosed an improvement to membrane-based separation processes for the removal of condensable organic components from fluid feed steams, comprising the use of a sweep stream 30 on the permeate side of the membrane 55 in a membrane module 25, said sweep stream being arranged to flow countercurrent to the fluid feed stream 14.

## Description

This invention pertains to improvements in volatile fluid separations by permselective membranes.

### Background of the Invention

Membrane-based removal of condensable volatile organic components ("VOCs") from fluid streams containing the same is known. See, for example, U.S. Patent Nos. 5,205,843, 5,199,962, 5,089,033, 4,994,094 and 4,857,078. However, for a variety of reasons, no known prior art approach has been able to achieve a high degree of efficiency while maintaining a low-cost, simple and flexible design having wide applicability. The principal reason for this appears to be the fact that although the driving force for removal of VOCs from feed streams by membranes is the difference in partial pressure of the organic across the membrane, the prior art achieves the partial pressure difference by increasing the total pressure difference across the membrane, using a compressor or vacuum pump as the sole means of obtaining the partial pressure differential. This is costly from an energy consumption standpoint, and is limited by the ability of the membrane to withstand the pressure differential created. A further reason for the limitations of the prior art methods is that the systems require ideal membrane permeability and selectivity for efficient operation. However, as each membrane has certain inherent permeability and selectivity limits, which prohibit the "tuning" of its properties, the system has no provision for adjustment to accommodate particular flow rates or concentrations.

These shortcomings of the prior art are overcome by the present invention, which is summarized and described in detail below.

### Summary of the Invention

The present invention comprises a basic improvement to known membrane-based processes directed to the removal of VOCs from gas, vapor and liquid feed streams. Specifically, the invention comprises the use of a sweep stream in a countercurrent flow on the permeate side of the membrane used in a VOC removal process. Several advantages are realized: (1) a higher driving force for the separation is attainable; (2) the total pressure differential across the membrane may be reduced or dispensed with altogether; (3) flow rate parameters may be tuned to maximize efficiency for the particular separation; and (4) higher and more efficient VOC recovery is attainable.

### Brief Description of the Drawings

FIG. 1 is a schematic drawing showing a countercurrent sweep flow on the permeate side of a membrane module.

FIGS. 2-9 are schematic drawings of exemplary embodiments of the present invention.

### Detailed Description of the Invention

The following definitions are used herein.

"Total purge" is the ratio of the total flow exiting the permeate side of the membrane module (what goes across the membrane plus sweep flow) to the total feed flow.

"Condensable VOC" includes organic compounds and components that are fluids below their critical temperatures and having a boiling point of greater than -100°C. For a stream containing a mixture of two or more condensable components, the term "condensable vapor" refers to the most readily condensable component or components. Examples of condensable vapors include vapors of the following: chlorofluorocarbons such as Freons and Halons; chlorinated hydrocarbons, such as methylene chloride, trichloroethylene, trichloroethane, carbon tetrachloride, chlorobenzene; non-chlorinated hydrophobic organics, such as benzene, toluene, xylene, ethyl benzene, cyclohexane, propane, butane, hexane, and octane; non-chlorinated hydrophilic organics, such as ethanol, methanol, other alcohols, acetone, ethyl acetate, methyl ethyl ketone, methyl t-butyl ketone, methyl isobutyl ketone, nitrobenzene, phenols, cresols, triethylamine, acetonitrile, dimethyl formamide, and dimethylacetamide.

"Sweep stream" is the gas or condensable vapor that is introduced to the permeate side of the membrane, and may include a portion of retentate flow that is introduced into the permeate at a port located nearest the retentate end of the module. By "condensable vapor" in the context of a sweep stream is meant organic and inorganic compounds and components that are fluids below their critical temperatures and having a boiling point of greater than -100°C.

"Specific feed flow rate" is the total feed flow rate divided by the total membrane surface area of the module.

The invention has broad application to all membrane-based processes for the separation of VOCs from any type of fluid feed stream, including processes wherein additional treatment steps are utilized, such as compression, condensation, absorption, recycling and combinations thereof. A basic step common to all such membrane-based separation processes comprises directing a condensable VOC-containing fluid feed stream to the feed side of a semipermeable membrane and withdrawing a stream enriched in the condensable VOC from the permeate side of the membrane.

While this basic step is normally conducted with a total pressure differential across the membrane, the differential may be substantially diminished or even deleted by virtue of the present invention. If the present invention is used with a pressure differential, a preferred differential is one wherein the ratio of permeate side pressure to feed side pressure is less than 0.5. In the process of the present invention, the total purge is preferably less than 60%.

In general, the driving force for the transport of a VOC across a membrane is its partial pressure difference across the membrane. In most cases, the partial pressure of a VOC vapor at saturation in a gas is very low. Therefore, the partial pressure driving force for VOC transport must be provided by adjusting the operating conditions of the membrane system. Typically, this is accomplished by creating a total pressure difference across the membrane, either by compressing the feed stream or by applying a vacuum to the permeate side of the membrane. In this case, to obtain the desired large partial pressure differential between the feed stream and the permeate, the membrane is designed to allow some of the feed gas to permeate the membrane, diluting the VOC vapor content in the permeate and maintaining a driving force. Although such a practice works, this method lacks versatility: the rate at which feed gas passes through the membrane is fixed by the membrane characteristics and the operating conditions, and cannot be adjusted to compensate for changes in feed stream composition or product purity requirements. In addition, at the retentate end of the module, the amount of feed gas that must be used to dilute the permeate is much higher than that required at the feed end of the module. Because the rate of feed gas transport across the membrane is essentially constant down the length of the module, more feed gas must be "leaked" through the membrane than is ideally needed, resulting in a high "loss" of feed gas into the permeate, and a loss in selectivity of the process.

It has been discovered that the use of a sweep stream, in which gas or condensable vapor is directed through a control valve into one or more ports in the module such that it is swept proximate to the permeate side of the membrane and countercurrent to the feed stream, in combination with a total pressure difference across the membrane, is a much more efficient method of providing the desired large partial pressure differential between the feed gas and the permeate. Because the sweep gas or condensable vapor is swept countercurrent to the direction of flow of the feed gas, it is introduced at the retentate end of the module, where the partial pressure in the feed is lowest. This leads to the highest possible driving force at this end of the module. Furthermore, in the counter-flow configuration, the permeate passes through the membrane and mixes with the permeate and sweep gas from the retentate end of the module in such a way as to lower the partial pressure of VOC in contact with the permeate side of the membrane down the entire length of the module. Thus, less gas is needed from the feed stream to dilute the permeate, and the total purge is minimized. Additionally, because the sweep stream comes from outside the module rather than permeating through the membrane, the amount of sweep can be controlled by a valve, making the system extremely versatile, allowing for changes in feed composition, temperature, and pressure, without affecting the overall performance of the system.

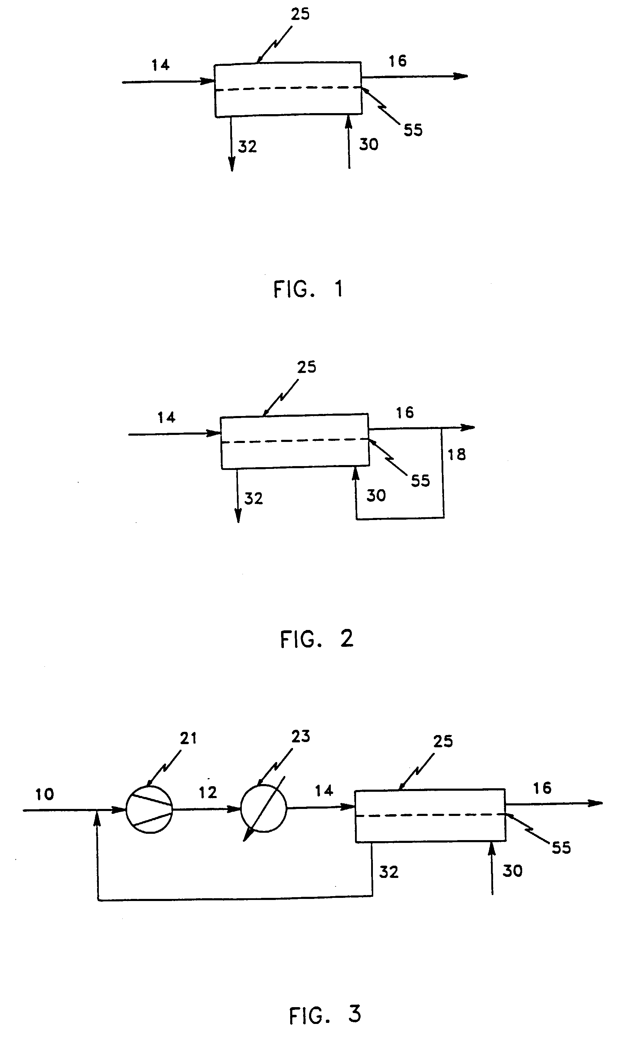

FIG. 1 depicts a system wherein a feed stream 14 containing a VOC and a noncondensable component is fed to a membrane module 25 containing membranes 55 that are permselective for the VOC. A sweep stream from an external source is fed to the permeate side of the membrane module 25 at a sweep inlet port located near the retentate end of the module so as to flow countercurrent to the feed stream. VOC is selectively removed from the feed stream in the membrane module, producing a retentate stream 16 depleted in VOC. The sweep stream 30 mixes with the permeate enriched in the VOC as it permeates the membrane 55 of module 25, producing a combined permeate side mixture 32 which exits the module at a permeate outlet port located near the feed end of the module.

An especially preferred mode of operation of the process of the present invention is the use of a sweep stream comprising a portion of the retentate gas, shown schematically as element 18 in FIG. 2. The portion may be from about 1% to about 60% of the total retentate gas.

The volumetric flow of the sweep stream at the sweep inlet port may be adjusted to provide the desired efficiency. Preferably, the volumetric flow of the sweep stream is sufficient to reduce the partial pressure of the more permeable component on the permeate side of the membrane at the retentate end of the module to below about 90% or less the value on the feed side of the membrane at the retentate end of the module. The amount of sweep used will therefore depend on the operating conditions and desired concentration of condensable organic in the retentate stream. Generally, the volumetric flow of the sweep stream should be at least 0.5% of the volumetric flow of the combined permeate-side mixture. In cases where the desired concentration in the retentate stream is very low and the membrane selectivity is high, the volumetric flow of the sweep stream can be 99% or more of the volumetric flow of the combined permeate-side mixture.

The sweep stream used may be any gas or condensable vapor that contains a low concentration of the VOC to be removed from the feed stream. For example, in applications where nitrogen is used to blanket a flammable solvent, the nitrogen can be used as the sweep stream. A portion of the retentate stream can be used as the sweep stream. Other examples of fluids that can be used as the sweep stream include argon, helium, hydrogen, air, steam, carbon dioxide, and carbon monoxide.

The feed gas may comprise virtually any condensable or noncondensable gas containing VOC vapor in any concentration. Typical applications include solvent removal from the off gases of the drying of synthetic fibers and films, plastics, printing inks, paints, lacquers and enamels; from solvent degreasing operations; from the release of hydrocarbon vapors during the course of storage and transfer of petroleum products; from commercial and industrial dry-cleaning operations; and from polyurethane and other plastic foam manufacturing. The concentration of these streams varies widely, from a few ppm to as high as 40-50% or more organic. Exemplary VOC vapors that may be separated and/or recovered include chlorofluorocarbons, chlorinated hydrocarbons; and nonhalogenated hydrocarbons, such as acetone, xylene, ethyl acetate, ethyl benzene, ethyl ether, cyclohexane, ethanol, methanol, and other alcohols, cresols, nitrobenzene, toluene, methyl ethyl ketone, carbon disulfide, isobutanol, benzene, propane, butane, pentane, hexane and octane. Many of such VOC-containing streams comprise the VOC in air. Mixtures of VOCs in nitrogen are also commonly encountered, because nitrogen is frequently used as a blanketing gas. Streams of VOCs in other gases, or streams comprising mixtures of VOCs are also found. For example, hydrogenation reactions in the chemical industry yield off-gas streams containing hydrogen and various hydrocarbons. Treatment of such streams could be carried out using a membrane type preferentially permeable to the hydrocarbon component or a membrane type preferentially permeable to hydrogen. Mixed VOC streams might arise, for example, from natural gas processing or petrochemical refining where the stream could contain a mixture of lower alkanes such as methane, ethane, propane and butane.

The types of membranes suitable for use in the present invention may be broadly described as those which are relatively permeable to VOCs and relatively impermeable to other gases in the feed stream. The membrane can be made entirely of the permselective material or the permselective material may be supported on a porous membrane, fabric or screen. The permselectivity portion of the membrane is usually, but not always, an elastomeric or rubbery polymer. Examples of such permselective materials useful for such separations include, but are not limited to, natural rubber, nitrile rubber, polystyrene-butadiene copolymers, poly(butadiene-acrylonitrile) rubber, polyurethanes, polyamides, polyacetylenes, poly(trimethylsilylpropyne), fluoroelastomers, poly(vinylchlorides), poly(phosphazenes), particularly those with organic substituents, halogenated polymers, such as poly(vinylidene fluoride) and poly(tetrafluoroethylene), and polysiloxanes, including silicone rubber. Copolymers of rubbery polymers and glassy polymers such as polyimides or poly(arylene ethers) are also suitable. Ion-exchange membranes may also be used for some applications.

The membrane may be isotropic or asymmetric. Additionally, the membrane may be homogeneous or a multilayer composite. In most cases, it is preferred that the membrane material be crosslinked to provide sufficient resistance to swelling or dissolution by the components in the feed stream. The membrane may be made by a solvent phase-inversion process, thermally induced phase-inversion process, melt-extrusion process, or by a wet or dry solvent-casting process. In the case of multilayer composites, the selective layer can be formed by dip-coating, painting, spray-coating, solution-coating, or by interfacial polymerization.

In multilayer composites, the support layers that provide mechanical strength to the composite (as opposed to the permselective layer) should give as little resistance to the transport of the permeating species through the selective layer as is technically feasible. Additionally, the support membrane should be chemically and thermally resistant, allowing for operation on hot feed streams containing various chemical constituents. Materials suitable for the support membrane include, but are not limited to, organic polymers such as polypropylene, polyacrylonitrile, poly(vinylidenefluorides), poly(etherimides), polyimides, polysulfones, poly(ether-sulfones), poly(arylsulfones), poly(phenylquinoxalines), polybenzimidazoles, and copolymers and blends of these materials; and inorganic materials such as porous glass, carbon, ceramics, and metals.

The membrane can be used in the form of a flat sheet or hollow fiber or tube. For flat-sheet membranes, the membrane may be placed into a module designed to permit countercurrent flow of the permeate stream relative to the feed stream. This can include plate-and-frame modules or spiral-wound modules. For hollow fibers and tubes, the feed flow may be on the outside (shell side) or inside (tube side) of the fibers. Especially preferred is a tube-side-feed hollow fiber module. The materials used in the membrane module should have sufficient chemical and thermal resistance to permit long-term operation.

Exemplary systems utilizing the principles of the present invention are illustrated in the schematics comprising FIGS. 3-9.

In FIG. 3 there is shown a system wherein a VOC-containing feed gas 10 is directed to compressor 21, producing a higher pressure stream 12, which is conveyed to a condenser 23 to remove a condensable VOC. The noncondensable stream 14 from the condenser is introduced to a countercurrent-sweep VOC recovery module 25; a sweep stream 30 is fed to the permeate side of the membrane module 25 at a sweep inlet port located near the retentate end of the module so as to flow countercurrent to the feed stream. The condensable VOC is selectively removed in the membrane module, producing a retentate stream 16 depleted in the VOC. The sweep stream 30 mixes with the permeate enriched in VOC that permeates the membrane of module 25, producing a combined permeate-side mixture 32 that exits from the membrane module at a permeate outlet port located near the feed end of the module. The combined permeate-side mixture 32 is then recycled to and mixed with the feed gas 10.

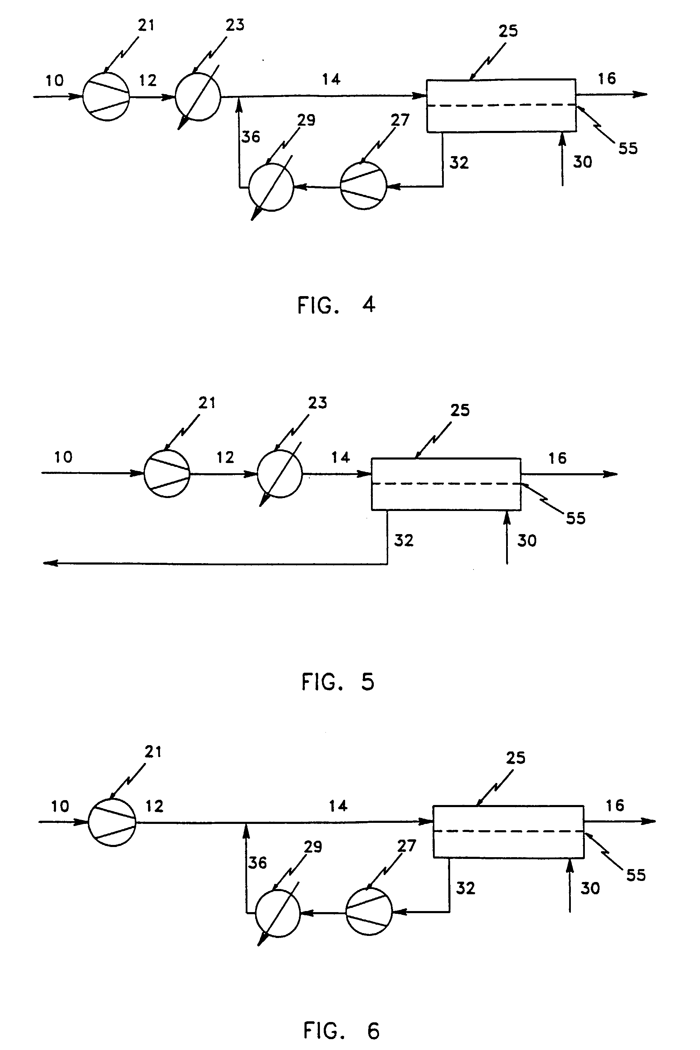

FIG. 4 is a schematic of a system that is essentially the same as the system depicted in FIG. 3, except that the combined permeate-side mixture 32 is directed to a vacuum pump/compressor 27 and then to a second condenser 29, where VOC is recovered. The noncondensable stream 36 from the second condenser 29 is then mixed with the noncondensable stream from the first condenser 23.

FIG. 5 shows a schematic of a system that is essentially the same as the system depicted in FIG. 3, except that the combined permeate-side mixture 32 is not mixed with the feed gas 10.

FIG. 6 shows a schematic of a system that is essentially the same as the system depicted in FIG. 4, except that a first condenser 23 is not used to treat the pressurized gas exiting the first compressor 21. In this case, the noncondensable stream from the condenser 29 is mixed with the effluent from the first compressor 21.

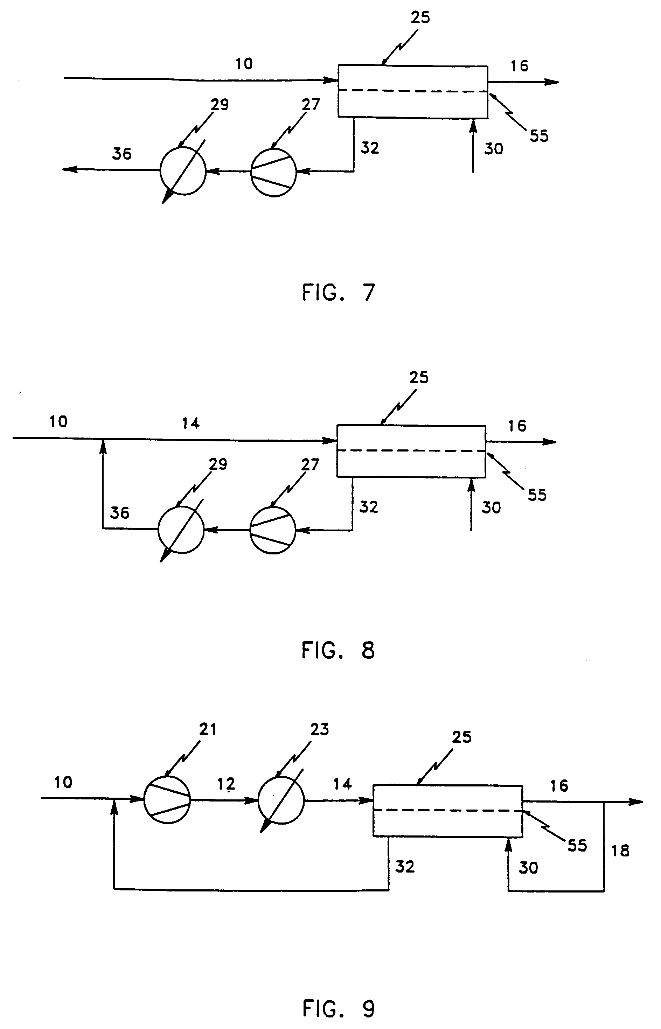

FIG. 7 depicts a system wherein a VOC-containing feed gas 10 is fed to the membrane module 25. A sweep stream 30 is fed to the permeate side of a membrane module 25 at a sweep inlet port located near the retentate end of the module so as to flow countercurrent to the feed stream. The condensable VOC is selectively removed in a membrane module, producing a retentate stream 16 depleted in the VOC. Sweep stream 30 mixes with the permeate enriched in the VOC that permeates the membrane of module 25, producing a combined permeate-side mixture 32 that exits from the membrane module at a permeate outlet port located near the feed end of the module. The combined permeate-side mixture 32 is then directed to vacuum pump/compressor 27 and then to condenser 29, where VOC is removed. The noncondensable stream 36 from condenser 29 then exits the system.

FIG. 8 shows a schematic of a system that is essentially the same as the system depicted in FIG. 7, except that the noncondensable stream 36 from the condenser 29 is recycled to and mixed with the feed gas 10.

FIG. 9 shows a schematic of a system that is essentially the same as the system depicted in FIG. 3, except that a portion of the retentate stream 18 is used as the sweep gas.

### Example 1

A feed gas comprising 42,000 ppm acetone in nitrogen at 7.8 atmospheres (absolute) and at a temperature of 38°C was fed into a hollow fiber module. The flow rate of the feed stream was 1.8 std m³/m²-hr. The module comprised composite hollow fibers with inside diameters of 360 µm and an effective length of 38 cm, making up an effective membrane surface area of 80 cm². The inside surfaces of the hollow fibers were coated with a selective layer of crosslinked poly(dimethylsiloxane) (PDMS).

A sweep stream comprising approximately 10% of the retentate produced by the module was introduced at a sweep inlet port located near the retentate end of the module, so as to flow countercurrent to the direction of the feed flow, at a flow rate of 0.1 std m³/m²-hr. The combined permeate-side mixture had a total flow rate of 0.9 std m³/m²-hr, corresponding to total purge of 50%.

Under these operating conditions, the concentration of acetone in the retentate from the hollow fiber membrane module was 20 ppm. This represents a 99.95% removal of acetone from the feed gas.

### Examples 2-6

Example 1 was substantially repeated, but with variable feed and sweep stream flow rates. These results obtained are reported in Table 1, along with the results from Example 1.

**Table 1**

| Example No. | Feed* | Sweep* | Combined Permeate-Side Mixture* | Retentate Acetone Concentration | Acetone Removal Efficiency |
|---|---|---|---|---|---|
| 1 | 1.8 | 0.1 | 0.9 | 20 ppm | 99.95% |
| 2 | 4.4 | 1.4 | 2.2 | 630 ppm | 98.5 % |
| 3 | 10.0 | 4.2 | 5.0 | 3700 ppm | 91.2 % |
| 4 | 3.0 | 0.1 | 0.9 | 760 ppm | 98.2 % |
| 5 | 4.7 | 0.6 | 1.4 | 1300 ppm | 96.9 % |
| 6 | 7.7 | 1.5 | 2.3 | 4200 ppm | 90.0 % |

| | | | | | |
|---|---|---|---|---|---|
| * Flow rate in units of std m³/m²-hr. | | | | | |

### Example 7

The module described in Example 1 was used to treat a feed stream consisting of 5500 ppm toluene in nitrogen at 7.8 atm (absolute) and at a temperature of 37°C. The flow rate of the feed stream was 4.0 std m³/m²-hr. A sweep stream comprising approximately 49% of the retentate produced by the module was introduced at-a sweep inlet port located near the retentate end of the module, so as to flow countercurrent to the direction of the feed flow, at a flow rate of 1.9 std m³/m²-hr. The combined permeate-side mixture had a total flow rate of 2.0 std m³/m²-hr, corresponding to a total purge of 50%. Under these conditions, the retentate produced by the module contained 375 ppm toluene, corresponding to a removal efficiency of 93.2%.

### Examples 8-11

The module described in Example 1 was used to treat the feed stream described in Example 7, while varying the flow rate of the feed and sweep streams. The results obtained are reported in Table 2, along with the results from Example 7.

**Table 2**

| Example No. | Feed* | Sweep* | Combined Permeate-Side Mixture* | Retentate Toluene Concentration | Toluene Removal Efficiency |
|---|---|---|---|---|---|
| 7 | 4.0 | 1.9 | 2.0 | 375 ppm | 93.2 % |
| 8 | 2.4 | 1.1 | 1.2 | 995 ppm | 84.9 % |
| 9 | 3.4 | 0.9 | 1.0 | 1810 ppm | 67.1 % |
| 10 | 4.1 | 1.2 | 1.2 | 1390 ppm | 74.7 % |
| 11 | 8.5 | 2.5 | 2.4 | 1130 ppm | 79.5 % |

| | | | | | |
|---|---|---|---|---|---|
| * Flow rate in units of std m³/m²-hr. | | | | | |

### Example 12

A feed gas comprising 5500 ppm toluene in nitrogen at 7.8 atmospheres (absolute) and at a temperature of 37°C was fed to a hollow fiber module. The flow rate of the feed stream was 1.6 std m³/m²-hr. The module comprised composite hollow fibers of the same type as in Example 1, except that the effective length of the fibers was 100 cm and the effective membrane surface area was 200 cm².

A sweep stream comprising approximately 47% of the retentate produced by the module was introduced at a sweep inlet port located near the retentate end of the module, so as to flow countercurrent to the direction of the feed flow, at a flow rate of 0.7 std m³/m²-hr. The combined permeate-side mixture had a total flow rate of 0.8 std m³/m²-hr, corresponding to a total purge of 50%.

Under these operating conditions, the concentration of toluene in the retentate from the hollow fiber membrane was 24 ppm, corresponding to a toluene removal rate of 99.6%.

### Example 13

The module described in Example 1 was operated on a feed stream of 4000 ppm toluene in nitrogen at 11.2 atm (absolute) and at a temperature of 35°C. The flow rate of the feed stream to the module was set at 3.8 std m³/m²-hr. In this case, the permeate pressure was reduced using a vacuum pump so that the permeate pressure was 0.053 atm (absolute). Approximately 49% of the retentate stream was introduced as a sweep stream at an inlet port located near the retentate end of the module, so as to flow countercurrent to the direction of the feed flow, at a flow rate of 1.8 std m³/m²-hr. The combined permeate-side mixture had a total flow rate of 1.9 std m³/m²-hr, corresponding to a total purge of 50%. Under these conditions, the retentate stream had a toluene concentration of 20 ppm, corresponding to a toluene removal rate of 99.5%.

### Example 14

The module described in Example 1 was operated on a feed stream of 14,900 ppm benzene and 5300 ppm toluene in nitrogen at 7.8 atm (absolute) and at a temperature of 34°C. The flow rate of the feed stream to the module was set at 5.0 std m³/m²-hr. Approximately 49% of the retentate stream was introduced at a sweep inlet port located near the retentate end of the module, so as to flow countercurrent to the direction of the feed flow, at a flow rate of 2.4 std m³/m²-hr. The combined permeate-side mixture had a total flow rate of 2.5 std m³/m²-hr, corresponding to a total purge of 50%. Under these conditions, the retentate stream had a benzene concentration of 165 ppm, and a toluene concentration of 110 ppm, corresponding to benzene and toluene removal rates of 98.9% and 97.9%, respectively.

### Examples 15-18

The module described in Example 1 was operated on a feed stream of 19,000 ppm methanol in nitrogen at 7.6 atm (absolute) and at a temperature of 30°C. The flow rates of the feed and sweep streams were varied as reported in Table 3, yielding the performance reported therein.

**Table 3**

| Example No. | Feed* | Sweep* | Combined Permeate-Side Mixture* | Retentate Methanol Concentration | Methanol Removal Efficiency |
|---|---|---|---|---|---|
| 15 | 2.6 | 1.2 | 1.3 | 380 ppm | 98% |
| 16 | 4.2 | 2.0 | 2.1 | 1330 ppm | 93% |
| 17 | 8.0 | 3.9 | 4.0 | 3420 ppm | 82% |
| 18 | 10.8 | 5.3 | 5.4 | 4940 ppm | 74% |

| | | | | | |
|---|---|---|---|---|---|
| * Flow rate in units of std m³/m²-hr. | | | | | |

### Example 19

The module described in Example 1 was operated on a feed stream of 7.2 mol% methylene chloride in nitrogen at 7.8 atm (absolute) and at a temperature of 40°C. The flow rate of the feed stream to the module was set at 1.2 std m³/m²-hr. Approximately 45% of the retentate stream was introduced at a sweep inlet port located near the retentate end of the module, so as to flow countercurrent to the direction of the feed flow, at a flow rate of 0.5 std m³/m²-hr. The combined permeate-side mixture had a total flow rate of 0.6 std m³/m²-hr, corresponding to a total purge of 50%. Under these conditions, the retentate stream had a methylene chloride concentration of 0.7 mol%, corresponding to a removal rate of 90%.

### Example 20

A feed gas comprising 4400 ppm methyl isobutyl ketone (MIBK) in nitrogen at 7.8 atmospheres (absolute) and at a temperature of 32°C was fed to a hollow fiber module. The flow rate of the feed stream was 5.5 std m³/m²-hr. The module comprised composite hollow fibers of the same type used in Example 1, except that the effective length of the fibers was 80 cm and the effective membrane surface area was 1800 cm².

A sweep stream comprising approximately 48% of the retentate produced by the module was introduced at a sweep inlet port located near the retentate end of the module, so as to flow countercurrent to the direction of the feed flow, at a flow rate of 2.5 std m³/m²-hr. The combined permeate-side mixture had a total flow rate of 2.8 std m³/m²-hr, corresponding to a total purge of 50%.

Under these conditions, the concentration of MIBK in the retentate from the hollow fiber membrane module was 836 ppm, corresponding to a removal rate of 81%.

### Example 21

Example 20 was substantially repeated, except that the flow rates of the sweep stream and the combined permeate-side mixture were 1.3 std m³/m²-hr and 1.6 std m³/m²-hr, respectively, corresponding to a total purge of 50%. Under these conditions, the concentration of MIBK in the retentate from the hollow fiber membrane module was 968 ppm, corresponding to a removal rate of 78%.

### Example 22

Example 20 was substantially repeated, except that the flow rate of the feed stream was set at 9.1 std m³/m²-hr. Additionally, an external nitrogen stream at a flow rate of 1.8 std m³/m²-hr was used as the sweep stream. The combined permeate-side mixture had a total flow rate of 2.4 std m³/m²-hr, corresponding to a total purge of 26%. Under these conditions, the concentration of MIBK in the retentate from the hollow fiber membrane module was 500 ppm, corresponding to a removal rate of 67%.

### Example 23

Example 20 was substantially repeated, except that the flow rate of the feed stream was set at 3.8 std m³/m²-hr. The sweep stream comprised a mixture of an external nitrogen stream and a portion of the retentate, at flow rates of 0.7 and 0.9 std m³/m²-hr, respectively. The combined permeate-side mixture had a total flow rate of 1.9 std m³/m²-hr, corresponding to a total purge of 50%. Under these conditions, the concentration of MIBK in the retentate from the hollow fiber membrane module was 792 ppm, corresponding to a removal rate of 82%.

The terms and expressions which have been employed in the foregoing specification are used therein as terms of description and not of limitation, and there is no intention in the use of such terms and expressions of excluding equivalents of the features shown and described or portions thereof, it being recognized that the scope of the invention is defined and limited only by the claims which follow.

## Claims

1. A process for the removal of condensable organic components from a fluid stream containing the same, said process including at least one membrane Separation step that comprises providing a membrane having feed and permeate sides, directing a condensable organic component-containing fluid stream to the feed side of said membrane and withdrawing a stream enriched in said condensable organic component from the permeate side, characterized in that a sweep stream selected from a gas and a condensable vapor is directed to the permeate side of said membrane used in said at least one membrane separation step, said sweep stream flowing countercurrent to the flow of said condensable organic component-containing fluid stream.

2. The process of claim 1 wherein said sweep stream is inert relative to said condensable organic component.

3. The process of claim 1 wherein said sweep stream comprises at least a portion of at least one of the retentates from said at least one membrane separation step.

4. The process of claim 1 wherein said sweep stream is supplied from a source external to said process.

5. The process of claim 1 wherein said sweep stream is selected from the group consisting of air, carbon dioxide, carbon monoxide, steam, nitrogen, argon and helium.

6. The process of claim 1 including at least one step wherein said condensable organic component is condensed.

7. The process of claim 6 including at least one step wherein, following condensation, at least a portion of said condensable organic component not condensed in said condensation step is recycled to the feed side of said membrane used in said at least one membrane separation step.

8. The process of claim 1 including at least one step wherein said condensable organic component is absorbed.

9. The process of claim 1 wherein said condensable organic component has a boiling point greater than -100°C and said fluid stream is selected from air, nitrogen and natural gas.

10. The process of claim 1 wherein said membrane used in said at least one membrane separation step is selected from a composite membrane comprising a support layer and a permselective coating layer and a hollow fiber membrane.

11. The process of claim 10 wherein said membrane is a hollow fiber membrane and the feed side of said hollow fiber membrane is selected from the lumen side and the outside.

12. The process of claim 1 wherein the total purge in said at least one membrane separation step is less than about 60%.
